# EUROPÄISCHE PATENTSCHRIFT

(11) **EP 4 020 736 B1**
(45) Veröffentlichungstag und Bekanntmachung des Hinweises auf die Patenterteilung: **24.07.2024**
(21) Anmeldenummer: 21202625.6
(22) Anmeldetag: 14.10.2021
(51) Int. Cl.: H02J 3/00, H02J 13/00

(54) **VERFAHREN ZUR ERMITTLUNG EINES SYSTEMZUSTANDES EINES SYSTEMS**
METHOD FOR DETERMINING A SYSTEM STATE OF A SYSTEM
PROCÉDÉ DE DÉTERMINATION D'UN ÉTAT D'UN SYSTÈME

(30) Priorität: 23.12.2020 DE 102020134880
(43) Veröffentlichungstag der Anmeldung: 29.06.2022
(73) Patentinhaber: Schleswig-Holstein Netz AG, 25451 Quickborn (DE)
(72) Erfinder: Pletzer, Tobias, 22527 Hamburg (DE); Sowa, Torsten, 44139 Dortmund (DE); Genzel, Carl-Heinz, 28199 Bremen (DE)
(74) Vertreter: Bals & Vogel Patentanwälte PartGmbB

(56) Entgegenhaltungen:
- CN-A- 102 496 072
- CN-A- 112 116 138
- JP-B2- 4 834 515

## Beschreibung

Die vorliegende Erfindung betrifft ein Verfahren zur Ermittlung eines Systemzustands eines Systems und ein Ermittlungssystem zu diesem Zweck.

Für viele Systeme, insbesondere kooperative Systeme wie das Energienetz und/oder (Strom-) Verteilungssysteme, ist eine Koordination der verfügbaren Aktionen von der zuverlässigen Ermittlung des Systemzustands abhängig. Beispielsweise bedingt die Dezentralisierung des Energieversorgungssystems Herausforderungen in der Koordination dezentraler Anlagen zur Sicherstellung der Versorgungssicherheit. Eine zentrale Herausforderung ist es hierbei, eine Vielzahl dezentraler Anlagen bei gleichzeitiger Sicherstellung der betrieblichen Grenzen des Verteilnetzes optimal, gleichmäßig und effizient zu koordinieren. Ferner ist es eine Aufgabe, die Systemsicherheit sicherzustellen. So kann es notwendig sein, bestimmte Aktionen im Energieversorgungsnetz nicht zu jedem Zeitpunkt zu erlauben. Beispielsweise müssen Rechte und Prioritäten für die Durchführung von Aktionen im Energieversorgungsnetz durchgesetzt werden. So könnte beispielsweise ein hoher Energieverbrauch wie durch Ladestationen die physikalischen Grenzen des Verteilnetzbetriebs verletzen.

Für die Koordinierung der verfügbaren Aktionen in einem Energieversorgungssystem ist es bspw. bekannt, anhand von Modellen wie dem Quotenmodell eine zentrale Abregelung zu ermöglichen. Solche Modelle haben jedoch den Nachteil, dass von einer zentralen Instanz ausgegangen wird, welche die Regeln festlegt, wobei dies Effizienzverluste und/oder geringere Transparenz bedingen kann.

Aus den Druckschriften WO 2017199053 und US 20170083989 sind herkömmliche Systeme bekannt. Aus der CN 102 496 072 A ist ferner ein gattungsgemäßes Verfahren bekannt.

Es ist daher eine Aufgabe der vorliegenden Erfindung, die voranstehend beschriebenen Nachteile zumindest teilweise zu beheben. Es ist insbesondere eine Aufgabe, die Ermittlung eines Systemzustands und ggf. die darauf basierende Koordination der verfügbaren Aktionen in einem System zu verbessern. Weiter kann es eine Aufgabe sein, eine Ermittlung des Systemzustands und insbesondere die Koordination in einem Energieversorgungssystem zu verbessern und auf diese Weise das Risiko einer Gefährdung der Versorgungssicherheit und/oder eines Auftretens von kritischen Zuständen wie lokalen Stromausfällen zu verringern. Ferner kann es eine Aufgabe sein, einen ermittelten Systemzustand an weitere Teilnehmer des Systems zuverlässig bereitzustellen.

Die voranstehende Aufgabe wird gelöst durch ein Verfahren mit den Merkmalen des Anspruchs 1 und durch ein Ermittlungssystem mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Ermittlungssystem, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur Ermittlung eines Systemzustands eines Systems. Hierbei ist insbesondere vorgesehen, dass das System als ein Energieverteilungssystem, auch Stromverteilungssystem bezeichnet, ausgeführt ist. Das Energieverteilungssystem kann bspw. als ein elektrisches Versorgungsnetz vorgesehen sein. Auch kann es alternativ möglich sein, dass das System als ein Verkehrssteuerungssystem ausgeführt ist, z. B. für autonomes Fahren.

Bei dem erfindungsgemäßen Verfahren kann es vorgesehen sein, dass die nachfolgenden Schritte durchgeführt werden, vorzugsweise nacheinander in der angegebenen Reihenfolge oder in beliebiger Reihenfolge, wobei die Schritte auch wiederholt durchgeführt werden können:
- Erfassen wenigstens eines elektrischen Kennwertes (oder einer Vielzahl elektrischer Kennwerte) des Systems durch ein Kennwerterfassungssystem, wobei vorzugsweise der Kennwert jeweils durch eine lokale Messung (insbesondere einer physikalischen Messgröße am System) wenigstens eines Kennwerterfassers des Kennwerterfassungssystems erfasst wird, wobei unterschiedliche Kennwerte auch durch unterschiedliche Kennwerterfasser erfasst werden können,
- Übermitteln des wenigstens einen erfassten Kennwertes an ein dezentrales Datenhaltungssystem, vorzugsweise durch eine digitale Datenübertragung des erfassten Kennwertes in der Form eines digitalen Messwertes, und/oder zur Verteilung des wenigstens einen Kennwertes an wenigstens einen oder mehrere unterschiedliche Zustandsabschätzer,
- Durchführen einer Schätzung des Systemzustands anhand des wenigstens einen übermittelten Kennwertes durch (den) wenigstens einen Zustandsabschätzer, vorzugsweise durch eine Zusammenfassung eines der übermittelten Kennwerte mit weiteren der übermittelten Kennwerte, welche bevorzugt an den Zustandsabschätzer von unterschiedlichen Kennwerterfassern übermittelt worden sind,
- Durchführen einer Validierung des geschätzten Systemzustands durch wenigstens einen Zustandsprüfer jeweils anhand wenigstens einer lokalen Messung (insbesondere einer physikalischen Messgröße am System) des Zustandsprüfers, bspw. durch einen Vergleich des geschätzten Systemzustands mit einem Systemzustand aus einer eigenen Schätzung zumindest anhand eines Kennwertes, welcher durch die lokale Messung erfasst wurde,
- Hinterlegen des validierten Systemzustands im Datenhaltungssystem, z. B. durch eine nicht-flüchtige Speicherung.

Dies hat den Vorteil, dass der Systemzustand dezentral ermittelt und validiert und somit besonders zuverlässig und transparent bestimmt und hinterlegt werden kann. Die erfindungsgemäßen Schritte können es ferner ermöglichen, dass zu jeder Zeit gültige Kennwerte verfügbar sind, die für die Bestimmung eines gültigen teilnehmerübergreifenden Systemzustands notwendig sind und damit gleichzeitig einen gültigen teilnehmerübergreifenden Systemzustand beschreiben. Als Teilnehmer des Systems werden bspw. die Kennwerterfasser und/oder Zustandsabschätzer und/oder Zustandsprüfer verstanden. Ferner kann die durch das erfindungsgemäße Verfahren gewonnene Transparenz die Sicherheit des Gesamtsystems verbessern, da alle Teilnehmer aufgrund der gemeinsamen Kenntnis des Systemzustands entsprechend systemdienlich und damit unabhängig, aber dennoch gemeinsam handeln können.

Die physikalische Messung kann bspw. eine Strom- und/oder Leistungsmessung umfassen, um den Kennwert zu erhalten, welcher für einen elektrischen Verbrauch im Energieverteilungssystem spezifisch ist.

Es kann vorgesehen sein, dass auf Basis des validierten Systemzustands wenigstens eine Entscheidung, insbesondere Aktion, des Systems durchgeführt wird. Beispielsweise kann diese Entscheidung die Bereitstellung von Energie im System betreffen. Allgemein formuliert kann in Abhängigkeit von der Validierung der Systemzustand verwendet werden, um eine Entscheidung und insbesondere Aktion im System durchzuführen, welche mehrere Teilnehmer des Systems betrifft, bspw. die Energieverteilung beeinflusst. Für das Beispiel Energiesystem lassen sich virtuelle Kraftwerksbetreiber und Netzbetreiber anführen, welche in Abhängigkeit zueinander stehen. Durch die gemeinsame Kenntnis der Kennwerte oder des Systemzustands können unabhängig voneinander die Entscheidungen getroffen werden, die im Kontext des Gesamtsystems direkt validiert werden und nur zulässig sind, wenn die Versorgungssicherheit nicht beeinträchtigt ist.

Die Erfindung kann zudem den Vorteil bereitstellen, dass eine transparente, sichere und dezentrale Plattform geschaffen wird, die Entscheidungen oder Aktionen des Systems, welche den Systemzustand betreffen, vereinfachen und automatisieren kann. Beispielsweise kann die Entscheidung oder Aktion eine Steuerung des Energieflusses im System sein.

Ferner kann ein weiterer Vorteil durch die Erfindung bereitgestellt sein, dass eine Überprüfung eines Konsens durch alle Kennwerte, insbesondere gemessene Werte, erfolgt. Auf diese Weise kann der Systemzustand mit hoher Sicherheit und Zuverlässigkeit geschätzt werden. Bspw. können hierzu die verschiedenen Kennwerte miteinander verglichen werden und vorzugsweise eine Abweichung der Kennwerte bspw. mit einem vordefinierten Schwellenwert vergleichen werden, um festzustellen, ob ein Konsens vorliegt. Insbesondere werden dabei solche Kennwerte miteinander vergleichen, welche von unterschiedlichen Kennwerterfassern erfasst wurden. Weiter kann auch der, insbesondere dezentral, geschätzte Systemzustand hierbei mitberücksichtigt werden.

Das System ist vorteilhafterweise als wenigstens eines der nachfolgenden Systemarten ausgeführt:
- Ein Verteilungssystem, insbesondere ein Verteilnetz wie ein Energienetz,
- Ein Energieversorgungssystem,
- Ein System zur Bereitstellung eines Redispatch-Prozesses,
- Ein System zur Ansteuerung von Ladestationen für Elektrofahrzeuge, um eine Aufladung der Elektrofahrzeuge zu koordinieren,
- Ein System zur Koordinierung einer Sektorenkopplung in einem Energieversorgungssystem.

Das System kann insbesondere als dezentrales System organisiert sein, bei welchem nicht eine zentrale Instanz (wie ein Verteilnetzbetreiber) die Grenzen für die verfügbaren Aktionen setzt, bspw. wer in welchem Umfang das Verteilnetz nutzen kann.

Das dezentrale Datenhaltungssystem kann eine dezentrale Datenbank wie ein Distributed Ledger bzw. Blockchain aufweisen oder als solche ausgeführt sein.

Wenn das dezentrale Datenhaltungssystem als eine Blockchain ausgeführt ist oder eine solche aufweist, kann das Datenhaltungssystem eine kontinuierlich erweiterbare Liste von Datensätzen, Blöcke genannt, aufweisen, welche mittels kryptographischer Verfahren miteinander verkettet sein können. Jeder Block kann dabei einen kryptographisch sicheren Hash (Streuwert) des vorhergehenden Blocks und/oder einen Zeitstempel und/oder Transaktionsdaten aufweisen. Die Ausdrücke "Block" oder "Blöcke" werden nachfolgend im engeren Sinne als ein solcher Block bzw. solche Blöcke einer Blockchain verstanden.

Ferner kann es im Rahmen der Erfindung vorgesehen sein, dass bei dem Übermitteln der wenigstens eine erfasste Kennwert jeweils an mindestens zwei verschiedene Datenhaltungsinstanzen des Datenhaltungssystems übertragen wird, wobei vorzugsweise in Abhängigkeit von einem vordefinierten Ereignis (z. B. überschreitet die Anzahl der neu empfangenen Kennwerte einen Schwellenwert) wenigstens oder genau eine der Datenhaltungsinstanzen als der Zustandsabschätzer bestimmt wird, welcher die Schätzung durchführt. Das vordefinierte Ereignis ist bspw. das Überschreiten eines Schwellenwertes durch die Anzahl der übermittelten Kennwerte. In anderen Worten kann wiederholt die Bestimmung des Zustandsabschätzers immer dann erfolgen, wenn dieses Ereignis eintritt, also z. B. die Anzahl der seit der letzten Bestimmung des Zustandsabschätzers übermittelten Kennwerte wieder den Schwellenwert überschreitet. Insbesondere können durch den Zustandsabschätzer zur Vorbereitung der Schätzung aus den übermittelten Kennwerten einzelne Datensätze ausgewählt werden, um den aktuellen Zustand des gesamten Systems abzubilden, der aus seiner Sicht als valide gilt. Anhand der ausgewählten Datensätze kann dann die Schätzung durchgeführt werden. Beispielsweise werden hierzu Strommesswerte der Kennwerte ausgewählt und miteinander verglichen, um die Schätzung durchzuführen.

Die Datenhaltungsinstanzen können auch als Consumer der Kennwerte bezeichnet werden, die Zustandsabschätzer können auch als Creator bezeichnet werden, und die Kennwerterfasser können als Producer bezeichnet werden.

Die Schätzung ermöglicht eine Abschätzung zu einem validen Gesamtsystem durch den Zustandsabschätzer, und kann dabei auf seiner internen Systemsicht und den gesammelten Kennwerten der Kennwerterfasser basieren. Zustandsabschätzer können aufgrund dieser Anforderungen bspw. Mehrwertdienste mit Expertise für das Gesamtsystem ausgeführt sein, im Fall des Energiesektors beispielsweise als virtuelle Kraftwerke, Energievermarkter aber auch Netzbetreiber.

Algorithmisch kann die Schätzung z. B. im Energiesektor durch eine Topologieschätzung und/oder State-Estimation und/oder künstlicher Intelligenz erfolgen. Es sind eine Vielzahl herkömmlicher Methoden zur Schätzung bekannt, auf welche dabei zurückgegriffen werden kann. Es reicht ggf. für eine einfache Ausführung der Schätzung aus, wenn dabei die übermittelten Kennwerte durch die eigene lokale Messung plausibilisiert werden. Bspw. kann der Systemzustand auch einfach durch die Zusammenfassung der Kennwerte in einen gemeinsamen Datensatz oder Block direkt beschrieben werden.

Vorteilhaft ist es zudem, wenn die lokalen Messungen jeweils Messungen am System sind, welche zumindest eine Messung einer gelieferten Energie aus dem Energieverteilungssystem (d. h. bspw. eines Energieverbrauchs) umfassen. Bspw. kann durch einen Stromzähler die Menge eines aus dem System gelieferten Stroms als Energieverbrauch gemessen werden, und der Kennwert entsprechend diesen Messwert umfassen. Ebenfalls kann die Messung bei einem Energielieferanten, z. B. bei einem Kraftwerk, erfolgen, um die erzeugte Menge Energie zu messen und als Kennwert zur Verfügung zu stellen. Die Schätzung kann bspw. dadurch erfolgen, dass die Kennwerte mit Informationen über die erzeugte Menge Energie mit den Kennwerten mit Informationen über den Energieverbrauch verglichen werden, bspw. in der Form einer Bilanzierung. Wenn hierbei auch eine eigene lokale Messung verwendet wird, um wenigstens einen der Kennwerte für den Vergleich bereitzustellen, kann dieser Vorgang ggf. auch zur Validierung genutzt werden.

Optional ist es denkbar, dass weitere Kennwerterfasser vorgesehen sind, um weitere Kennwerte des Systems durch jeweils eigene lokale Messungen an unterschiedlichen Positionen des Systems zu erfassen und an das Datenhaltungssystem zu übermitteln. Die unterschiedlichen Positionen können z. B. verschiedene Verbraucher oder Teilnehmer des Systems sein, z. B. an unterschiedlichen Ladestationen oder Kraftwerken oder Haushaltsanschlüssen des Energieverteilungssystems. Die Übermittlung kann z. B. mittels eines Netzwerkes wie das Internet und/oder ein Mobilfunknetz erfolgen. Hierzu können die Kennwerterfasser bspw. eine Netzwerk- oder Internetschnittstelle aufweisen.

Es kann optional möglich sein, dass die Schätzung und Validierung anhand der weiteren Kennwerte durchgeführt wird, und vorzugsweise, dass die Validierung zusätzlich anhand eines durch die lokale Messung des Zustandsprüfers erfassten Kennwertes des Systems durchgeführt wird, um den geschätzten Systemzustand zu überprüfen. Hierzu kann bspw. auch eine erneute Schätzung erfolgen, bspw. dadurch, dass die Kennwerte mit Informationen über die erzeugte Menge Energie mit den Kennwerten mit Informationen über den Energieverbrauch verglichen werden. Die Verwendung der eigenen lokalen Messung, um wenigstens einen der Kennwerte für den Vergleich bereitzustellen, kann somit zur Validierung, insbesondere Plausibilisierung des geschätzten Systemzustands, dienen.

Von weiterem Vorteil kann vorgesehen sein, dass der Zustandsprüfer (vorzugsweise unabhängig von dem Zustandsabschätzer) erneut die Schätzung des Systemzustands anhand des wenigstens einen übermittelten Kennwertes und/oder weiterer Kennwerte durchführt. Anschließend können beide geschätzten Systemzustände verglichen werden, um eine Abweichung festzustellen. Sofern die Systemzustände im Wesentlichen übereinstimmen (z. B. unter Berücksichtigungen von Toleranzen), kann die Validierung positiv sein.

Vorteilhafterweise ist ferner im Rahmen der Erfindung vorgesehen, dass bei der Validierung eine Abweichung des geschätzten Systemzustands zum erneut geschätzten Systemzustand bestimmt wird, um in Abhängigkeit von der Abweichung einen fehlerhaften geschätzten Systemzustand zu registrieren. Die Registrierung kann z. B. durch die fälschungssichere (z. B. verschlüsselte) Protokollierung des fehlerhaften Systemzustands, also der negativen Validierung, erfolgen.

Ferner kann bei der Erfindung vorgesehen sein, dass das Hinterlegen des validierten Systemzustands im Datenhaltungssystem dadurch erfolgt, dass ein Block mit dem Systemzustand, und insbesondere zusätzlich mit einem Zeitstempel und/oder dem übermittelten Kennwert, gebildet wird. Dieser Block kann bspw. ein Block einer Blockchain sein, um die Hinterlegung fälschungssicher durchzuführen. Zur Hinterlegung können bspw. die Instanzen des Datenhaltungssystems, wie bspw. Kennwerterfasser oder Zustandsprüfer, einen Datenspeicher und/oder eine Verarbeitungsvorrichtung wie einen Prozessor oder Computer aufweisen.

Gemäß einer vorteilhaften Weiterbildung der Erfindung kann vorgesehen sein, dass mehrere Zustandsprüfer vorgesehen sind, um parallel die Validierung durchzuführen, wobei vorzugsweise der geschätzte Systemzustand dann als gesamt valide gekennzeichnet wird, und insbesondere nur dann im Datenhaltungssystem hinterlegt wird, wenn die Mehrzahl der Zustandsprüfer den geschätzten Systemzustand positiv validieren. Hierzu kann bspw. eine digitale Kommunikation zwischen den Zustandsprüfers stattfinden, um die Ergebnisse der Validierung untereinander mitzuteilen.

Optional ist es denkbar, dass der geschätzte Systemzustand mit einem Zeitstempel in einer Blockstruktur zusammengefasst wird, und insbesondere zur Validierung von dem Zustandsabschätzer an einen oder mehrere Zustandsprüfer übertragen wird. Auf diese Weise kann eine verteilte Hinterlegung des geschätzten Systemzustands bspw. in einer Blockchain erfolgen.

Ebenfalls Gegenstand der Erfindung ist ein Ermittlungssystem zur Ermittlung eines Systemzustands eines Systems. Hierbei ist insbesondere vorgesehen, dass das System als ein Energieverteilungssystem ausgeführt ist. Das Ermittlungssystem kann die nachfolgenden Komponenten aufweisen:
- ein Kennwerterfassungssystem zum Erfassen wenigstens eines elektrischen Kennwertes des Systems, wobei vorzugsweise wenigstens ein Kennwerterfasser des Kennwerterfassungssystems zur Erfassung des Kennwertes jeweils durch eine lokale Messung des Kennwerterfassers vorgesehen ist,
- eine Übermittlungsvorrichtung zum Übermitteln des wenigstens einen erfassten Kennwertes an ein dezentrales Datenhaltungssystem,
- wenigstens einen Zustandsabschätzer zum Durchführen einer Schätzung des Systemzustands anhand des wenigstens einen übermittelten Kennwertes,
- wenigstens einen Zustandsprüfer zum Durchführen einer Validierung des geschätzten Systemzustands jeweils anhand wenigstens einer lokalen Messung des Zustandsprüfers,
- das Datenhaltungssystem zum Hinterlegen des validierten Systemzustands.

Damit bringt das erfindungsgemäße Ermittlungssystem die gleichen Vorteile mit sich, wie sie ausführlich mit Bezug auf ein erfindungsgemäßes Verfahren beschrieben worden sind. Zudem kann das Ermittlungssystem geeignet sein, das erfindungsgemäße Verfahren auszuführen.

Die beschriebenen Komponenten des Ermittlungssystems können jeweils ein Computerprogramm, insbesondere Computerprogrammprodukt, und/oder einen Prozessor zur Ausführung des Computerprogramms aufweisen, um bei der Ausführung wenigstens einen Verfahrensschritt eines erfindungsgemäßen Verfahrens durchzuführen und/oder den jeweils beschrieben Zweck der Komponente bereitzustellen.

Ebenfalls separat unter Schutz gestellt sein kann ein Zustandsabschätzer zum Durchführen einer Schätzung des Systemzustands anhand des wenigstens einen übermittelten Kennwertes. Ferner kann separat unter Schutz gestellt sein ein Zustandsprüfer zum Durchführen einer Validierung des geschätzten Systemzustands jeweils anhand wenigstens einer lokalen Messung des Zustandsprüfers.

Vorteilhafterweise kann bei der Erfindung vorgesehen sein, dass der Kennwerterfasser als wenigstens eine der nachfolgenden Vorrichtungen ausgeführt ist:
- ein Energiezähler, insbesondere Stromzähler eines Hausanschlusses,
- eine Ladevorrichtung, insbesondere Ladestation, für ein Elektrofahrzeug,
- ein Messsystem an einer dezentralen Anlage des Energieverteilungssystems,
- ein Schutzsystem in einem Netzbetriebsknoten des Energieverteilungssystems,
- eine Windkraftanlage,
- ein Ortsnetztransformator,
- ein Umspannwerk,
wobei jeder der bzw. der jeweilige Kennwerterfasser dazu ausgeführt sein kann, lokal die Messung zur Erfassung des Kennwertes durchzuführen, den Kennwert eindeutig in einer lokalen Datenstruktur zu speichern, und für das Übermitteln des Kennwertes die Datenstruktur an das Datenhaltungssystem zu übertragen. Dabei kann bspw. auch eine Eindeutigkeitsprüfung erfolgen, also bspw. die Überprüfung, dass der Kennwert nicht mehrfach gespeichert wird. Ferner kann zur Sicherstellung durch die Kennwerterfasser (Producer), dass der Kennwert eindeutig und damit nicht wiederholbar ist, auch innerhalb der Datenstruktur der Kennwert mit einem Zeitstempel (Zeit seiner Erfassung) verknüpft sein. Ferner kann zur Sicherstellung der Unveränderbarkeit und Fälschungssicherheit dieser Datenstruktur die Datenstruktur durch den Kennwerterfasser digital signiert und/oder verschlüsselt werden. Dabei ist auch eine Verschlüsselung der Datenstruktur bei der Übermittlung an das Datenhaltungssystem denkbar, um die Vertraulichkeit zu gewährleisten.

Es kann möglich sein, dass verschiedene lokalen Messung und/oder neben der Messung auch weitere Daten erfasst werden, um einen Kennwert zu bilden. Dies können Daten sein, die mit dem Systemzustand korrelieren, wie Wettervorhersagen oder Car2x Daten, oder Messungen, wie eine Wärmemessung an einem Transformator, Wettermessungen oder die Messdaten von Elektrofahrzeugen.

Gemäß einer vorteilhaften Weiterbildung der Erfindung kann vorgesehen sein, dass das Datenhaltungssystem dadurch dezentral ausgeführt ist, dass es mehrere geographisch entfernt angeordnete Instanzen aufweist, welche insbesondere mehrere Zustandsabschätzer und/oder Zustandsprüfer umfassen. Die Instanzen können auch als Consumer der Kennwerte bezeichnet werden. Um einer Unterschlagung oder Veränderungen der Kennwerte durch Consumer entgegen zu wirken, kann es vorgesehen sein, dass jeder Kennwerterfasser (Producer) die eigenen Kennwerte an mindestens zwei voneinander unabhängige Consumer weitergibt. Weiter kann es möglich sein, dass die Consumer wiederum die Kennwerte an weitere bzw. alle teilnehmenden Consumer weiterleiten. Dies kann in direkter Kommunikation aber auch über einen Replikationsprozess zwischen den Consumern für ein Netz aus Consumern geschehen. In letzterem Fall kann jeder Consumer die Kennwerte an weitere bekannte Consumer senden, die wiederrum dasselbe tun. Innerhalb dieses Prozesses müssen vorteilhafterweise die bzw. alle Consumer dazu beitragen, dass es nicht zu Übertragungsschleifen kommt (z. B. durch eine Regel, dass jeder Consumer nur einmal den gleichen Kennwert, erkennbar über die Signatur, weiterleiten darf).

Von weiterem Vorteil kann vorgesehen sein, dass der Zustandsabschätzer und/oder Zustandsprüfer jeweils gleichzeitig als Kennwerterfasser ausgeführt ist. Damit ergibt sich eine Bündelung der verschiedenen Aufgaben. Alternativ oder zusätzlich kann der Zustandsabschätzer und/oder Zustandsprüfer und/oder Kennwerterfasser und/oder das Datenhaltungssystem jeweils wenigstens eine Datenverarbeitungsanlage (Computer oder Server) umfassen oder als solche ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung zur Visualisierung eines erfindungsgemäßen Verfahrens,
- Fig. 2: eine schematische Darstellung eines erfindungsgemäßen Ermittlungssystems,
- Fig. 3: eine schematische Darstellung eines Systems.

In den nachfolgenden Figuren werden für die gleichen technischen Merkmale auch von unterschiedlichen Ausführungsbeispielen die identischen Bezugszeichen verwendet.

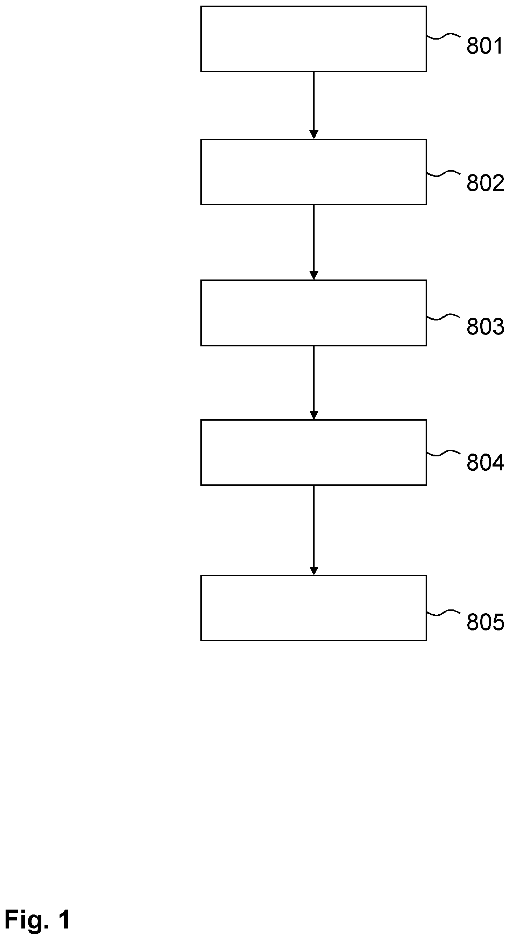

In Figur 1 ist ein erfindungsgemäßes Verfahren zur Ermittlung eines Systemzustands eines Systems 700 gezeigt, wobei das System 700 als ein Energieverteilungssystem 700 ausgeführt sein kann. Gemäß einem ersten Verfahrensschritt 801 erfolgt ein Erfassen wenigstens eines elektrischen Kennwertes 500 des Systems 700 durch ein Kennwerterfassungssystem 200, wobei der Kennwert 500 jeweils durch eine lokale Messung eines Kennwerterfassers 210 des Kennwerterfassungssystems 200 erfasst wird. Gemäß einem zweiten Verfahrensschritt 802 erfolgt ein Übermitteln des wenigstens einen erfassten Kennwertes 500 an ein dezentrales Datenhaltungssystem 300. Anschließend kann gemäß einem dritten Verfahrensschritt 803 ein Durchführen einer Schätzung 650 des Systemzustands anhand des wenigstens einen übermittelten Kennwertes 500 durch wenigstens einen Zustandsabschätzer 311 vorgesehen sein. Danach kann ein Durchführen einer Validierung 670 des geschätzten Systemzustands durch wenigstens einen Zustandsprüfer 312 jeweils anhand wenigstens einer lokalen Messung des Zustandsprüfers 312 gemäß einem vierten Verfahrensschritt 804 erfolgen. Ein fünfter Verfahrensschritt 805 ist ggf. das Hinterlegen des validierten Systemzustands im Datenhaltungssystem 300.

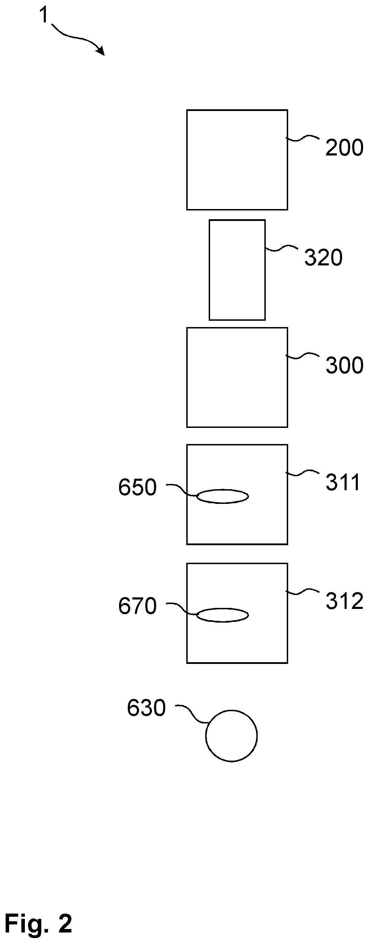

In Figur 2 ist ein erfindungsgemäßes Ermittlungssystem 1 zur Ermittlung eines Systemzustands eines Systems 700 visualisiert. Es kann ein Kennwerterfassungssystem 200 zum Erfassen wenigstens eines elektrischen Kennwertes 500 des Systems 700 vorgesehen sein, wobei wenigstens ein Kennwerterfasser 210 des Kennwerterfassungssystems 200 zur Erfassung des Kennwertes 500 jeweils durch eine lokale Messung des Kennwerterfassers 210 vorgesehen ist. Ferner ist eine Übermittlungsvorrichtung 320 zum Übermitteln des wenigstens einen erfassten Kennwertes 500 an ein dezentrales Datenhaltungssystem 300 vorgesehen. Darüber hinaus kann das Ermittlungssystem 1 wenigstens einen Zustandsabschätzer 311 zum Durchführen einer Schätzung 650 des Systemzustands anhand des wenigstens einen übermittelten Kennwertes 500 und wenigstens einen Zustandsprüfer 312 zum Durchführen einer Validierung 670 des geschätzten Systemzustands jeweils anhand wenigstens einer lokalen Messung des Zustandsprüfers 312 umfassen. Auch kann das Datenhaltungssystem 300 Teil des Ermittlungssystems 1 sein, damit der validierte Systemzustand im Datenhaltungssystem 300 hinterlegt werden kann.

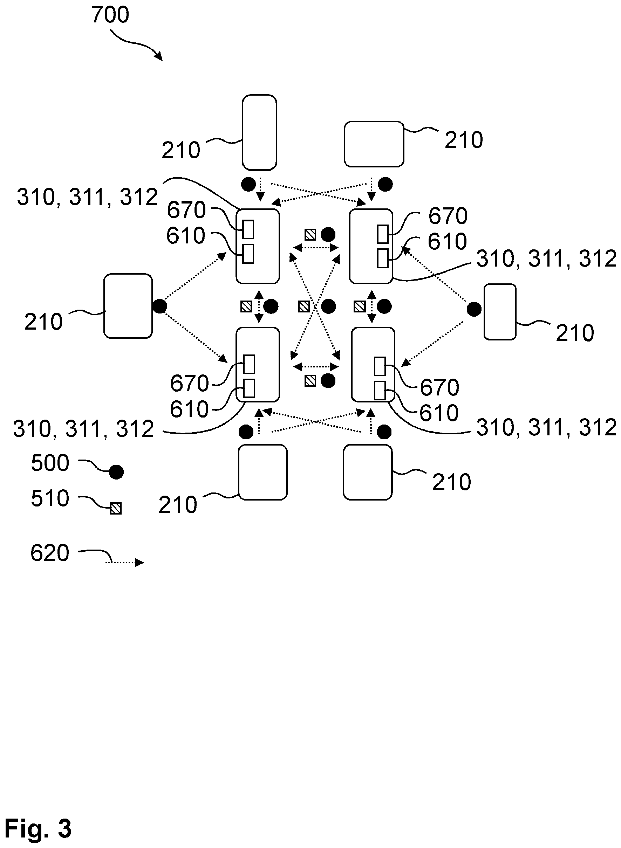

In Figur 3 ist eine beispielhafte Ausbildung eines Systems 700 gezeigt, in welchem ein erfindungsgemäßes Verfahren bzw. Ermittlungssystem 1 zum Einsatz kommen kann. Die Pfeile geben dabei eine Kommunikation 620 zwischen den Teilnehmern des Systems 700 an.

Es ist erkennbar, dass als Teilnehmer des Systems 700 sogenannte Producer 210, also die Kennwerterfasser 210, zur Erfassung des wenigstens einen Kennwertes 500 dienen können. Dabei kann eine Verteilung der Kennwerte 500 in der Art erfolgen, dass bei dem Übermitteln der wenigstens eine erfasste Kennwert 500 jeweils an mindestens zwei verschiedene Datenhaltungsinstanzen 310, auch Consumer 310 bezeichnet, des Datenhaltungssystems 300 übertragen wird und/oder auch durch die Consumer 310 untereinander verteilt wird. In Abhängigkeit von einem vordefinierten Ereignis (z. B. erreicht die Anzahl der neu empfangenen Kennwerte 500 einen Schwellenwert) kann wenigstens oder genau eine der Datenhaltungsinstanzen 310 als der Zustandsabschätzer 311, also Creator, bestimmt werden, welcher die Schätzung 650 durchführt. In Figur 3 sind die per Kommunikation 620 übertragenen Kennwert 500 als Kreis visualisiert. Die Kennwerte 500 können die Consumer 310 validierten und auf diese Weise eine validierte Kennwertkette 510 bilden. Die Schätzung 650 und Validierung 670 kann anhand der Kennwerte 500 durchgeführt werden, wobei die Validierung 670 zusätzlich anhand eines durch die lokale Messung des Zustandsprüfers 312 erfassten Kennwertes 500 des Systems 700 durchgeführt werden kann, um den geschätzten Systemzustand zu überprüfen und/oder die validierte Kennwertkette 510 zu bilden (durch die Kettenbildung 610).

Das Hinterlegen des validierten Systemzustands im Datenhaltungssystem 300 und insbesondere der validierten Kennwertketten 510 kann ggf. dadurch erfolgen, dass ein Block 630 mit dem Systemzustand und/oder mit einem Zeitstempel und/oder dem übermittelten Kennwert 500 gebildet wird. Es ist ersichtlich, dass mehrere Zustandsprüfer 312 vorgesehen sein können, um parallel die Validierung 670 durchzuführen, wobei der geschätzte Systemzustand dann als gesamt valide gekennzeichnet wird, und insbesondere nur dann im Datenhaltungssystem 300 hinterlegt wird, wenn die Mehrzahl der Zustandsprüfer 312 den geschätzten Systemzustand positiv validieren.

Es kann vorgesehen sein, dass die Kennwerte 500 bzw. die ausgewählten Daten der übermittelten Kennwerte 500 durch den Zustandsabschätzer 311 bzw. Creator 311, insbesondere im Fall der Blockchain-Technologie, zusammen mit dem Ergebnis der Schätzung 650 (insbesondere einer Berechnung der Schätzung 650) zu einer Blockstruktur zusammengefasst werden. Dabei kann der Block 630, wie die einzelnen Kennwerte 500, z. B. mit Hilfe einer zeitlichen Komponente, eindeutig und nicht wiederholbar umgesetzt werden und/oder zum Schutz der Integrität signiert sein. Wenn das Datenhaltungssystem 300 eine Blockchain 300 aufweist, können die Blöcke 630 innerhalb der Blockchain 300 aufeinander aufbauen. Daher kann es vorgesehen sein, dass ein Block 630 nur ein Delta - also einen Unterschied - des Systemzustands mit Kennwerten 500 enthält, die sich zum letzten Block 630 verändert haben oder neu hinzugekommen bzw. weggefallen sind.

Der Block 630 kann durch den Creator 311 an eine ausgewählte Gruppe weiterer Consumer 310 (insbesondere den Zustandsprüfern 312, auch Validatoren 312 bezeichnet) versenden, die das Ergebnis der Schätzung 650 bzw. Berechnung mit ihrer internen Systemsicht und den übermittelten und somit gesammelten Kennwerten 500 der Producer 210 vergleichen. Im Energiesektor kann dies beispielhaft mittels eines Abgleichs der gelösten Leistungsflussgleichungen basierend auf einer State-Estimation möglich sein. Sofern das Ergebnis und die Kennwerte 500 im Block 630 plausibel (i. S. v. gering abweichend) sind, kann der Block 630 durch die einzelnen Validatoren 312 genehmigt bzw. abgelehnt werden. Hierzu kann ein Datenaustausch zwischen den Validatoren 312 stattfinden, der bspw. analog zu der beschriebenen Verteilung von Kennwertdaten zwischen den Consumern 310 umgesetzt werden kann. Kommt die Mehrheit der Validatoren 312 zu einem positiven Ergebnis und genehmigt den Block 630, wird er als valide angesehen und durch den Creator 311 im Datenhaltungssystem 300 hinterlegt, insbesondere an die Blockchain 300 angehängt, und zwischen allen Consumern 310 analog zu den Kennwerten 500 propagiert. Das dezentrale Datenhaltungssystem 300 wird somit aktualisiert und alle Consumer 310 erfahren ein Update über den Zustand des Gesamtsystems. Der Creator 311 und die übereinstimmenden Validatoren 312 bekommen in diesem Fall eine positive Rückmeldung. Bei einer negativen Abstimmung erhält der Creator 311 dagegen eine negative Rückmeldung. Dasselbe kann für Validatoren 312 gelten, die nicht mit der Mehrheit übereinstimmen oder ihrer Pflicht zur Abstimmung nicht nachkommen.

Der Ansatz kann bspw. im Bereich der Blockchain-Technologie als Proof-of-Stake-Ansatz einordnen werden. Dabei muss eine Anonymität im Sinne der Teilnehmer nicht zwingend umgesetzt werden. Der Gesamtsystemzustand in dieser Blockchain 300 kann die Basis für alle weiteren Entscheidungen und Transaktionen (z. B. Redispatch, Markthandel, Systemdienstleistungen, Schalthandlungen) darstellen. Die Koordination kann auf einem Consumer und Producer Modell in Verbindung mit einem dezentralen System 700, wie die Blockchain 300, für eine vertrauenswürdige, gemeinsame Informationsverbreitung zwischen einzelnen nicht vertrauenswürdigen Teilnehmern zur Datenhaltung basieren. Consumer 310 und Producer 210 können dabei getrennte Komponenten sein oder es können Consumer 310 und Producer 210 auch gemeinsam bzw. kombiniert auftreten.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Ermittlungssystem

- 200: Kennwerterfassungssystem
- 210: Kennwerterfasser, Producer

- 300: Datenhaltungssystem, dezentrales Datenhaltungssystem, Blockchain
- 310: Datenhaltungsinstanz, Consumer
- 311: Zustandsabschätzer, Creator
- 312: Zustandsprüfer, Validator

- 320: Übermittlungsvorrichtung

- 500: Kennwert
- 510: Kennwertkette, Validierte Kennwertkette des Systemzustands

- 610: Kettenbildung

- 620: Kommunikation
- 630: Block

- 650: Schätzung

- 670: Validierung

- 700: System, Energieverteilungssystem
- 801 - 805: Verfahrensschritte

## Patentansprüche

1. Verfahren zur Ermittlung eines Systemzustands eines Systems (700), wobei das System (700) als ein Energieverteilungssystem (700) ausgeführt ist, wobei die nachfolgenden Schritte durchgeführt werden:
- Erfassen wenigstens eines elektrischen Kennwertes (500) des Systems (700) durch ein Kennwerterfassungssystem (200), wobei der Kennwert (500) jeweils durch eine lokale Messung eines Kennwerterfassers (210) des Kennwerterfassungssystems (200) erfasst wird,
- Übermitteln des wenigstens einen erfassten Kennwertes (500) an ein dezentrales Datenhaltungssystem (300),
- Durchführen einer Schätzung (650) des Systemzustands anhand des wenigstens einen übermittelten Kennwertes (500) durch wenigstens einen Zustandsabschätzer (311),
**dadurch gekennzeichnet,**
**dass** das Verfahren ferner umfasst:
- Durchführen einer Validierung (670) des geschätzten Systemzustands durch wenigstens einen Zustandsprüfer (312) jeweils anhand wenigstens einer lokalen Messung des Zustandsprüfers (312),
- Hinterlegen des validierten Systemzustands im Datenhaltungssystem (300).

2. Verfahren nach Anspruch 1,
**dadurch gekennzeichnet,**
**dass** bei dem Übermitteln der wenigstens eine erfasste Kennwert (500) jeweils an mindestens zwei verschiedene Datenhaltungsinstanzen (310) des Datenhaltungssystems (300) übertragen wird, wobei in Abhängigkeit von einem vordefinierten Ereignis wenigstens oder genau eine der Datenhaltungsinstanzen (310) als der Zustandsabschätzer (311) bestimmt wird, welcher die Schätzung (650) durchführt.

3. Verfahren nach Anspruch 1 oder 2,
**dadurch gekennzeichnet,**
**dass** die lokalen Messungen jeweils Messungen am System (700) sind, welche zumindest eine Messung einer gelieferten Energie aus dem Energieverteilungssystem umfassen.

4. Verfahren nach einem der vorhergehenden Ansprüche,
**dadurch gekennzeichnet,**
**dass** weitere Kennwerterfasser (210) vorgesehen sind, um weitere Kennwerte (500) des Systems (700) durch jeweils eigene lokale Messungen an unterschiedlichen Positionen des Systems (700) zu erfassen und an das Datenhaltungssystem (300) zu übermitteln.

5. Verfahren nach Anspruch 4,
**dadurch gekennzeichnet,**
**dass** die Schätzung (650) und Validierung (670) anhand der weiteren Kennwerte (500) durchgeführt werden, und dass die Validierung (670) zusätzlich anhand eines durch die lokale Messung des Zustandsprüfers (312) erfassten Kennwertes (500) des Systems (700) durchgeführt wird, um den geschätzten Systemzustand zu überprüfen.

6. Verfahren nach einem der vorhergehenden Ansprüche,
**dadurch gekennzeichnet,**
**dass** der Zustandsprüfer (312) unabhängig von dem Zustandsabschätzer (311) erneut die Schätzung (650) des Systemzustands anhand des wenigstens einen übermittelten Kennwertes (500) und/oder weiterer Kennwerte (500) durchführt.

7. Verfahren nach Anspruch 6,
**dadurch gekennzeichnet,**
**dass** bei der Validierung (670) eine Abweichung des geschätzten Systemzustands zum erneut geschätzten Systemzustand bestimmt wird, um in Abhängigkeit von der Abweichung einen fehlerhaften geschätzten Systemzustand zu registrieren.

8. Verfahren nach einem der vorhergehenden Ansprüche,
**dadurch gekennzeichnet,**
**dass** das Hinterlegen des validierten Systemzustands im Datenhaltungssystem (300) dadurch erfolgt, dass ein Block (630) mit dem Systemzustand, und insbesondere zusätzlich mit einem Zeitstempel und/oder dem übermittelten Kennwert (500), gebildet wird.

9. Verfahren nach einem der vorhergehenden Ansprüche,
**dadurch gekennzeichnet,**
**dass** mehrere Zustandsprüfer (312) vorgesehen sind, um parallel die Validierung (670) durchzuführen, wobei der geschätzte Systemzustand dann als gesamt valide gekennzeichnet wird, und insbesondere nur dann im Datenhaltungssystem (300) hinterlegt wird, wenn die Mehrzahl der Zustandsprüfer (312) den geschätzten Systemzustand positiv validieren.

10. Verfahren nach einem der vorhergehenden Ansprüche,
**dadurch gekennzeichnet,**
**dass** der geschätzte Systemzustand mit einem Zeitstempel in einer Blockstruktur zusammengefasst wird, und zur Validierung von dem Zustandsabschätzer (311) an einen oder mehrere Zustandsprüfer (312) übertragen wird.

11. Ermittlungssystem (1) zur Ermittlung eines Systemzustands eines Systems (700), wobei das System (700) als ein Energieverteilungssystem (700) ausgeführt ist, aufweisend:
- ein Kennwerterfassungssystem (200) zum Erfassen wenigstens eines elektrischen Kennwertes (500) des Systems (700), wobei wenigstens ein Kennwerterfasser (210) des Kennwerterfassungssystems (200) zur Erfassung des Kennwertes (500) jeweils durch eine lokale Messung des Kennwerterfassers (210) vorgesehen ist,
- eine Übermittlungsvorrichtung (320) zum Übermitteln des wenigstens einen erfassten Kennwertes (500) an ein dezentrales Datenhaltungssystem (300),
- wenigstens einen Zustandsabschätzer (311) zum Durchführen einer Schätzung (650) des Systemzustands anhand des wenigstens einen übermittelten Kennwertes (500), **gekennzeichnet durch**
- wenigstens einen Zustandsprüfer (312) zum Durchführen einer Validierung (670) des geschätzten Systemzustands jeweils anhand wenigstens einer lokalen Messung des Zustandsprüfers (312), wobei
- das Datenhaltungssystem (300) zum Hinterlegen des validierten Systemzustands ausgebildet ist.

12. Ermittlungssystem (1) nach Anspruch 11,
**dadurch gekennzeichnet,**
**dass** der Kennwerterfasser (210) als wenigstens eine der nachfolgenden Vorrichtungen ausgeführt ist:
- ein Energiezähler, insbesondere Stromzähler eines Hausanschlusses,
- eine Ladevorrichtung, insbesondere Ladestation, für ein Elektrofahrzeug,
- ein Messsystem an einer dezentralen Anlage des Energieverteilungssystems (700),
- ein Schutzsystem in einem Netzbetriebsknoten des Energieverteilungssystems (700),
- eine Windkraftanlage,
- ein Ortsnetztransformator,
- ein Umspannwerk,
wobei jeder der Kennwerterfasser (210) dazu ausgeführt ist, lokal die Messung zur Erfassung des Kennwertes (500) durchzuführen, den Kennwert (500) eindeutig in einer lokalen Datenstruktur zu speichern, und für das Übermitteln des Kennwertes (500) die Datenstruktur an das Datenhaltungssystem (300) zu übertragen.

13. Ermittlungssystem (1) nach einem der Ansprüche 11 bis 12,
**dadurch gekennzeichnet,**
**dass** das Datenhaltungssystem (300) dadurch dezentral ausgeführt ist, dass es mehrere geographisch entfernt angeordnete Instanzen aufweist, welche insbesondere mehrere Zustandsabschätzer (311) und/oder Zustandsprüfer (312) umfassen.

14. Ermittlungssystem (1) nach einem der Ansprüche 11 bis 13,
**dadurch gekennzeichnet,**
**dass** der Zustandsabschätzer (311) und/oder Zustandsprüfer (312) jeweils gleichzeitig als Kennwerterfasser (210) ausgeführt ist.

15. Ermittlungssystem (1) nach einem der Ansprüche 11 bis 14,
**dadurch gekennzeichnet,**
**dass** das Ermittlungssystem (1) dazu ausgeführt ist, die Verfahrensschritte eines Verfahren nach einem der Ansprüche 1 bis 10 auszuführen.

## Claims

1. Method for determining a system state of a system (700), wherein the system (700) is designed as a power distribution system (700), wherein the following steps are carried out:
- Detection of at least one electrical characteristic value (500) of the system (700) by a characteristic value detection system (200), the characteristic value (500) being detected in each case by a local measurement of a characteristic value detector (210) of the characteristic value detection system (200),
- Transmission of the at least one detected characteristic value (500) to a decentralized data storage system (300),
- Performing an estimation (650) of the system state based on the at least one transmitted characteristic value (500) by at least one state estimator (311),
**characterized in that**
the method further comprises:
- Performing a validation (670) of the estimated system state by at least one state checker (312) based on at least one local measurement of the state checker (312),
- Storing the validated system status in the data storage system (300).

2. Method according to claim 1,
**characterized in that**
during the transmission, the at least one detected characteristic value (500) is transmitted in each case to at least two different data storage instances (310) of the data storage system (300), at least or precisely one of the data storage instances (310) being determined as the state estimator (311) which performs the estimation (650) as a function of a predefined event.

3. Method according to claim 1 or 2,
**characterized in that**
the local measurements are in each case measurements on the system (700), which comprise at least one measurement of a supplied energy from the energy distribution system.

4. Method according to any one of the preceding claims,
**characterized in that**
further characteristic value detectors (210) are provided in order to detect further characteristic values (500) of the system (700) by means of their own local measurements at different positions of the system (700) and to transmit them to the data storage system (300).

5. Method according to claim 4,
**characterized in that**
the estimation (650) and validation (670) are carried out using the further characteristic values (500), and **in that** the validation (670) is additionally carried out using a characteristic value (500) of the system (700) detected by the local measurement of the state checker (312) in order to check the estimated system state.

6. Method according to any one of the preceding claims,
**characterized in that**
the state checker (312) again performs the estimation (650) of the system state independently of the state estimator (311) using the at least one transmitted characteristic value (500) and/or further characteristic values (500).

7. Method according to claim 6,
**characterized in that**
during the validation (670), a deviation of the estimated system state from the reestimated system state is determined in order to register an incorrect estimated system state as a function of the deviation.

8. Method according to any one of the preceding claims,
**characterized in that**
the validated system state is stored in the data storage system (300) **in that** a block (630) is formed with the system state, and in particular additionally with a time stamp and/or the transmitted characteristic value (500).

9. Method according to any one of the preceding claims,
**characterized in that**
a plurality of state checkers (312) are provided in order to perform the validation (670) in parallel, the estimated system state then being characterized as overall valid, and in particular only being stored in the data storage system (300) if the majority of the state checkers (312) positively validate the estimated system state.

10. Method according to any one of the preceding claims,
**characterized in that**
the estimated system state is summarized with a time stamp in a block structure and is transmitted from the state estimator (311) to one or more state checkers (312) for validation.

11. Determination system (1) for determining a system state of a system (700), wherein the system (700) is designed as a power distribution system (700), comprising:
- a characteristic value detection system (200) for detecting at least one electrical characteristic value (500) of the system (700), at least one characteristic value detector (210) of the characteristic value detection system (200) being provided for detecting the characteristic value (500) in each case by a local measurement of the characteristic value detector (210),
- a transmission device (320) for transmitting the at least one detected characteristic value (500) to a decentralized data storage system (300),
- at least one state estimator (311) for performing an estimation (650) of the system state based on the at least one transmitted characteristic value (500),
**characterized in that**
- at least one state checker (312) for performing a validation (670) of the estimated system state based on at least one local measurement of the state checker (312),
- the data storage system (300) is designed to store the validated system state.

12. Detection system (1) according to claim 11,
**characterized in that**
the characteristic value detector (210) is designed as at least one of the following devices:
- an energy meter, in particular an electricity meter of a house connection,
- a charging device, in particular a charging station, for an electric vehicle,
- a measuring system on a decentralized installation of the energy distribution system (700),
- a protection system in a grid operating node of the power distribution system (700),
- a wind turbine,
- a local network transformer,
- a transformer station,
wherein each of the characteristic value detectors (210) is adapted to locally perform the measurement for detecting the characteristic value (500), to uniquely store the characteristic value (500) in a local data structure, and to transmit the data structure to the data storage system (300) for transmitting the characteristic value (500).

13. Determination system (1) according to any one of claims 11 to 12,
**characterized in that**
the data storage system (300) is implemented in a decentralized manner **in that** it has a plurality of geographically remotely arranged instances, which in particular comprise a plurality of state estimators (311) and/or state checkers (312).

14. Determination system (1) according to any one of claims 11 to 13,
**characterized in that**
the state estimator (311) and/or state checker (312) is in each case simultaneously designed as a characteristic value detector (210).

15. Determination system (1) according to any one of claims 11 to 14,
**characterized in that**
the detection system (1) is designed to carry out the method steps of a method according to one of claims 1 to 10.

## Revendications

1. Procédé pour déterminer un état de système d'un système (700), dans lequel le système (700) est réalisé sous la forme d'un système de distribution d'énergie (700), les étapes suivantes étant exécutées :
- L'acquisition d'au moins une valeur caractéristique électrique (500) du système (700) par un système de détection de valeurs caractéristiques (200), la valeur caractéristique (500) étant respectivement acquise par une mesure locale d'un capteur de valeurs caractéristiques (210) du système de détection de valeurs caractéristiques (200),
- La transmission de la au moins une valeur caractéristique (500) saisie à un système de gestion de données (300) décentralisé,
- L'exécution d'une estimation (650) de l'état du système à partir de ladite au moins une valeur caractéristique transmise (500) par au moins un estimateur d'état (311),
**caractérisé en ce que**
le procédé comprend en outre
- L'exécution d'une validation (670) de l'état estimé du système par au moins un contrôleur d'état (312), respectivement, sur la base d'au moins une mesure locale du contrôleur d'état (312),
- Déposer l'état validé du système dans le système de gestion des données (300).

2. Procédé selon la revendication 1,
**caractérisé en ce que,**
lors de la transmission, l'au moins une valeur caractéristique (500) détectée est transmise respectivement à au moins deux instances de conservation de données (310) différentes du système de gestion de données (300), au moins ou exactement l'une des instances de conservation de données (310) étant déterminée, en fonction d'un événement prédéfini, comme l'estimateur d'état (311) qui effectue l'estimation (650).

3. Procédé selon la revendication 1 ou 2,
**caractérisé en ce que**
les mesures locales sont respectivement des mesures sur le système (700), qui comprennent au moins une mesure d'une énergie fournie par le système de distribution d'énergie.

4. Procédé selon l'une quelconque des revendications précédentes,
**caractérisé en ce que**
d'autres capteurs de valeurs caractéristiques (210) sont prévus pour enregistrer d'autres valeurs caractéristiques (500) du système (700) par des mesures locales respectivement propres à différentes positions du système (700) et pour les transmettre au système de gestion de données (300).

5. Procédé selon la revendication 4,
**caractérisé en ce que**
l'estimation (650) et la validation (670) sont effectuées à l'aide des autres valeurs caractéristiques (500), et **en ce que** la validation (670) est effectuée en outre à l'aide d'une valeur caractéristique (500) du système (700) saisie par la mesure locale du contrôleur d'état (312), afin de vérifier l'état estimé du système.

6. Procédé selon l'une quelconque des revendications précédentes,
**caractérisé en ce que**
le contrôleur d'état (312) effectue à nouveau l'estimation (650) de l'état du système à l'aide de l'au moins une valeur caractéristique (500) transmise et/ou d'autres valeurs caractéristiques (500), indépendamment de l'estimateur d'état (311).

7. Procédé selon la revendication 6,
**caractérisé en ce que,**
lors de la validation (670), on détermine un écart entre l'état estimé du système et l'état réestimé du système, afin d'enregistrer un état estimé erroné du système en fonction de l'écart.

8. Procédé selon l'une quelconque des revendications précédentes,
**caractérisé en ce que**
l'enregistrement de l'état validé du système dans le système de gestion de données (300) s'effectue par le fait qu'un bloc (630) est formé avec l'état du système, et en particulier en plus avec un horodatage et/ou la valeur caractéristique (500) transmise.

9. Procédé selon l'une quelconque des revendications précédentes,
**caractérisé en ce que**
plusieurs contrôleurs d'état (312) sont prévus pour effectuer en parallèle la validation (670), l'état estimé du système étant alors caractérisé comme étant globalement valide, et n'étant notamment enregistré dans le système de gestion de données (300) que si la majorité des contrôleurs d'état (312) valident positivement l'état estimé du système.

10. Procédé selon l'une quelconque des revendications précédentes,
**caractérisé en ce que**
l'état estimé du système est regroupé avec un horodatage dans une structure de bloc, et est transmis pour validation par l'estimateur d'état (311) à un ou plusieurs contrôleurs d'état (312).

11. Système de détection (1) pour détecter un état de système d'un système (700), dans lequel le système (700) est conçu comme un système de distribution d'énergie (700), comprenant :
- un système de détection de caractéristiques (200) pour détecter au moins une caractéristique électrique (500) du système (700), dans lequel au moins un capteur de valeurs de caractéristiques (210) du système de détection de caractéristiques (200) est prévu pour détecter la caractéristique (500) respectivement par une mesure locale du capteur de valeurs caractéristiques (210),
- un dispositif de transmission (320) pour transmettre la au moins une valeur caractéristique (500) détectée à un système de gestion de données (300) décentralisé,
- au moins un estimateur d'état (311) pour effectuer une estimation (650) de l'état du système à partir de ladite au moins une valeur caractéristique transmise (500),
**caractérisé en ce que**
- au moins un contrôleur d'état (312) pour effectuer une validation (670) de l'état estimé du système respectivement à l'aide d'au moins une mesure locale du contrôleur d'état (312),
- le système de gestion de données (300) est adapté pour stocker l'état de système validé.

12. Système de détection (1) selon la revendication 11,
**caractérisé en ce que**
le capteur de valeurs caractéristiques (210) est réalisé sous la forme d'au moins un des dispositifs suivants :
- un compteur d'énergie, notamment les compteurs d'électricité d'un raccordement domestique,
- un dispositif de charge, en particulier une station de charge, pour un véhicule électrique,
- un système de mesure sur une installation décentralisée du système de distribution d'énergie (700),
- un système de protection dans un noeud d'exploitation de réseau du système de distribution d'énergie (700),
- une éolienne,
- un transformateur local,
- une sous-station électrique,
dans lequel chacun des capteurs de valeurs caractéristiques (210) est adapté pour effectuer localement la mesure pour détecter la valeur caractéristique (500), pour stocker de manière unique la valeur caractéristique (500) dans une structure de données locale, et pour transmettre la structure de données au système de gestion de données (300) pour la transmission de la valeur caractéristique (500).

13. Système de détection (1) selon l'une quelconque des revendications 11 à 12,
**caractérisé en ce que**
le système de gestion de données (300) est réalisé de manière décentralisée par le fait qu'il présente plusieurs instances éloignées géographiquement, qui comprennent en particulier plusieurs estimateurs d'état (311) et/ou contrôleurs d'état (312).

14. Système de détection (1) selon l'une quelconque des revendications 11 à 13,
**caractérisé en ce que**
l'estimateur d'état (311) et/ou le contrôleur d'état (312) est réalisé respectivement en même temps en tant que détecteur de valeurs caractéristiques (210).

15. Système de détection (1) selon l'une quelconque des revendications 11 à 14,
**caractérisé en ce que**
le système de détection (1) est conçu pour exécuter les étapes de procédé d'un procédé selon l'une des revendications 1 à 10.
